# EUROPÄISCHE PATENTSCHRIFT

(11) **EP 3 605 175 B1**
(45) Veröffentlichungstag und Bekanntmachung des Hinweises auf die Patenterteilung: **17.03.2021**
(21) Anmeldenummer: 19176131.1
(22) Anmeldetag: 23.05.2019
(51) Int. Cl.: G02B 6/44, G02B 6/50

(54) **ANSCHLUSSDOSE FÜR GLASFASERBASIERTE VERTEILNETZE**
CONNECTION BOX FOR DISTRIBUTED NETWORKS BASED ON GLASS FIBRE
BOÎTE DE JONCTION POUR RÉSEAUX DE DISTRIBUTION À BASE DE FIBRE DE VERRE

(30) Priorität: 31.07.2018 DE 102018118450
(43) Veröffentlichungstag der Anmeldung: 05.02.2020
(73) Patentinhaber: LWL-Sachsenkabel GmbH-Spezialkabel und Vernetzungstechnik, 09390 Gornsdorf (DE)
(72) Erfinder: SCHUMANN, Lars, 09669 Frankenberg (DE); ZIMMERMANN, René, 09366 Stollberg/Erzgeb., OT Mitteldorf (DE); BECK, Sophie, 09385 Lugau (DE); DUUS, Silvia, 09419 Thum (DE); BROCK, Maik, 09390 Gornsdorf (DE); BAUERSACHS, Michael, 09376 Oelsnitz/Erzgeb. (DE)
(74) Vertreter: advotec.

(56) Entgegenhaltungen:
- EP-A2- 2 993 750
- US-A1- 2008 011 990
- US-A1- 2013 209 099
- Unknown: "2017 PRODUCT CATALOGUE OPTICAL DISTRIBUTION BOXES", , 18. März 2017 (2017-03-18), XP055644668, Gefunden im Internet: URL:https://www.micostelcom.com/data/file/ 0/950-micos-katalog-2017.pdf [gefunden am 2019-11-20]

## Beschreibung

Die Erfindung betrifft eine Anschlussdose für glasfaserbasierte Verteilnetze gemäß dem Oberbegriff des Anspruchs 1. Weiter betrifft die Erfindung ein Verfahren zur Installation solcher Anschlussdosen in einem Gebäude, gemäß Anspruch 4.

Anschlussdosen für faseroptische Verbindung zur Anordnung in Gebäuden, um diese an ein glasfaserbasiertes Verteilnetz anzuschließen, sind aus dem Stand der Technik bekannt. Beispielsweise die DE 20 2010 017 687 U1 beschreibt eine Anschlussdose gemäß dem Fibre-To-The-Home Standard (FTTH). Bei Verwendung dieser Anschlussdosen wird eine optische Faser, mittels der optische Datensignale von außerhalb eines Gebäudes durch eine Gebäudedurchführung in das Gebäude übertragbar sind, angeschlossen. Die Anschlussdose selbst wird gattungsgemäß innerhalb des Gebäudes befestigt. An der Anschlussdose ist ein Verbindungsanschluss vorgesehen, wobei die in der Gebäudedurchführung verlegte Faser mit dem Verbindungsanschluss verbunden ist, so dass Datensignale von außerhalb des Gebäudes zum Verbindungsanschluss hin übertragen werden können. An dem Verbindungsanschluss selbst können dann die optischen Daten eingespeist oder empfangen werden. Dies kann beispielsweise durch Anschluss von geeigneten Endgeräten mit faseroptischem Dateneingang geschehen. Die Bauart der gattungsgemäßen Anschlussdosen kann auf dem jeweiligen Anwendungsfall variiert werden. Insbesondere kann es sich um Auf- oder Unterputzdosen handeln, die beispielsweise an einer Wand montiert werden.

Aus der EP 2 993 750 A2 und dem Produktkatalog "2017 PRODUCT CATALOGUE OPTICAL DISTRIBUTION BOXES" des Unternehmens MICOS TELCOM s.r.o ist jeweils eine Anschlussdose gemäß dem Oberbegriff des Anspruchs 1 bekannt.

Ein Verfahren zur Verlegung von optischen Fasern innerhalb eines Gebäudes ist in der US 2008/011990 A1 offenbart. Aus der US 2013/209099 A1 ist eine Verteildose zur Verteilung von Signalen innerhalb eines optischen Fasernetzes außerhalb von Gebäuden bekannt.

Die aktuell üblichen Verfahren zur Herstellung eines optischen Datenanschlusses von Gebäuden unter Verwendung der bekannten Anschlussdosen ist kosten- und zeitaufwändig, da es sich in vier separaten Schritten vollzieht. Im ersten Schritt wird zunächst die Gebäudedurchführung, beispielsweise eine Kernbohrung hergestellt, wobei in der Gebäudedurchführung beispielsweise ein Leerrohr installiert wird. Im zweiten Schritt wird dann von außerhalb des Gebäudes ausgehend von einem Netzverteiler eine optische Faser durch die Gebäudedurchführung in das Gebäude eingeführt. Im dritten Schritt wird dann am vorbestimmten Anschlusspunkt des Gebäudes die Anschlussdose befestigt, und die durch die Gebäudedurchführung in das Gebäude eingeführte Faser durch ein geeignetes Verbindungsverfahren, beispielsweise Spleißen der Faser, mit dem Verbindungsanschluss der Anschlussdose verbunden. Im letzten Schritt wird dann noch die Lichtwellenleiterstrecke mit einem geeigneten Testverfahren zu Qualitätssicherungszwecken vermessen, um eine ausreichende Übertragungsqualität vom Netzverteiler außerhalb des Gebäudes bis hin zum Verbindungsanschluss der Anschlussdose zu realisieren.

Dieses oben beschriebene Verfahren zur Herstellung eines faseroptischen Gebäudeanschlusses bedeutet, dass im ungünstigsten Fall der Gebäudeinhaber viermal zur Verfügung stehen muss, um dem Installationspersonal Zutritt zum Gebäude zu gewähren. In Abhängigkeit von der Verfügbarkeit des Gebäudeinhabers erfordert die Planung von vier Terminen für den Gebäudezutritt einen hohen Aufwand für Terminplanung und Personaleinsatz.

Aufgabe der vorliegenden Erfindung ist es deshalb, eine Anschlussdose für glasfaserbasierte Verteilnetze vorzuschlagen, die mit einem geringeren Installationsaufwand im Gebäude installiert und an ein glasfaserbasiertes Verteilnetz angeschlossen werden kann. Weiter ist es Aufgabe der Erfindung, ein Verfahren zur Installation derartiger Anschlussdosen vorzuschlagen.

Diese Aufgaben werden durch die Lehren der beiden unabhängigen Hauptansprüche gelöst.

Vorteilhafte Ausführungsformen der Erfindung sind Gegenstand der Unteransprüche.

Die erfindungsgemäße Anschlussdose beruht auf dem Grundgedanken, dass die in der Gebäudedurchführung verlegte optische Faser bereits werkseitig an der Anschlussdose vormontiert ist. Die zur optischen Datenübertragung vorgesehene Kontaktstelle zwischen dieser Faser einerseits und dem Verbindungsanschluss der Anschlussdose andererseits ist ebenfalls werkseitig vorkonfektioniert, so dass diese Verbindung nicht mehr auf der Baustelle hergestellt werden muss. Wird nun die Anschlussdose mit der werkseitig vormontierten und vorkonfektionierten optischen Faser nach Herstellung der Gebäudedurchführung durch Zutritt in das Gebäude im Gebäude angebracht, so kann zugleich die optische Faser mit einem geeigneten Verfahren aus dem Gebäude heraus durch die Gebäudedurchführung zum außerhalb des Gebäudes angeordneten Netzverteiler gebracht werden. Da die optische Faser bereits werkseitig am Verbindungsanschluss der Anschlussdose vorkonfektioniert und getestet ist, entfällt das aufwendige Verbinden der optischen Faser mit der Anschlussdose auf der Baustelle. Stattdessen müssen lediglich die außerhalb des Gebäudes im Netzverteiler einmündenden Enden der Faser mit dem glasfaserbasierten Verteilnetz verbunden werden.

Durch die werkseitige Vormontage der optischen Fasern an der Anschlussdose können die Anschlüsse der Fasern werkseitigen Qualitätssicherungen unterworfen werden, was die Übertragungsqualität im Vergleich zu baustellenseitig hergestellten Verbindungen der Fasern erheblich verbessert. Außerdem kann der Test der Übertragungsqualität in den an der Anschlussdose vormontierten optischen Fasern nach Montage der Anschlussdose im Gebäude durch einfache Mittel wesentlich vereinfacht werden. Bei diesen einfachen Mitteln handelt es sich erfindungsgemäß um ein Schleifenelement, das werkseitig vormontiert wird und zwei Verbindungsanschlüsse der Anschlussdose paarweise miteinander verbindet. Durch diese paarweise Verbindung von zwei Verbindungsanschlüssen, an denen jeweils werkseitig bereits eine optische Faser angebracht ist, kann der Test der im Gebäude montierten Anschlussrohre signifikant vereinfacht werden. Denn für den Test der beiden optischen Fasern kann das Testgerät außerhalb des Gebäudes an den am Netzwerkverteiler befindlichen Enden angebracht, und die von den beiden Fasern und dem dazwischen angebrachten Schleifenelement gebildete Übertragungsstrecke getestet werden. Der Test kann dabei nacheinander in beiden Richtungen durchgeführt werden, so dass beim ersten Test die eine Faser und beim zweiten Test die andere Faser den Vorlauf bzw. jeweils umgekehrt den Nachlauf der zu testenden Übertragungsstrecke bildet. Ein Betreten des Gebäudes zur Durchführung des Tests ist nicht mehr nötig. Stattdessen kann der Benutzer nach Freigabe durch das Installationsunternehmen problemlos das Schleifenelement entfernen, und die Nutzung der optischen Datenstrecke durch Anschluss eines Endgeräts an die Anschlussdose beginnen.

Um definierte Testbedingungen beim Test der optischen Fasern, die mit dem Schleifenelement miteinander verbunden sind, zuverlässig gewährleisten zu können, ist es erfindungsgemäß vorgesehen, dass die lösbaren Verbindungsstellen des vormontierten Schleifenelements mit einem Siegelelement markiert sind. Wird dann das Schleifenelement vor Durchführung des Tests unbefugt entfernt, so kann dies durch das gebrochene Siegelelement problemlos festgestellt werden.

In welcher Weise die an der Anschlussdose werkseitig vormontierte optische Faser aus dem Gebäude heraus durch die Gebäudedurchführung zum außerhalb des Gebäudes befindlichen Netzverteiler gebracht wird, ist grundsätzlich beliebig. Gemäß einer bevorzugten Ausführungsform ist es vorteilhaft, wenn die an der Anschlussdose vormontierte optische Faser in der Art eines Kabels ausgebildet ist, das durch ein die Gebäudedurchführung bildendes Leerrohr durchgeblasen werden kann.

Insbesondere wenn an der Anschlussdose mehrere optische Fasern werkseitig vormontiert sind, ist es von Vorteil, wenn diese Fasern gemeinsam in einem durchblasbaren Kabel gebündelt werden.

Bevorzugt ist es, wenn das Schleifenelement lösbar mit den Verbindungsanschlüssen verbunden ist, um eine Entfernung des Schleifenelements nach Durchführung des Tests zu ermöglichen. Damit wird insbesondere ermöglicht, dass das Schleifenelement von einem Endverwender gegebenenfalls nach Rücksprache mit dem Montagepersonal entfernt wird, ohne dass dazu das Montagepersonal selbst die Räumlichkeiten im Gebäude betreten muss.

Das erfindungsgemäße Verfahren zu Installation der Anschlussdose wird dadurch charakterisiert, dass nach Anbringung der Anschlussdose im Gebäude zunächst die an der Anschlussdose vormontierten Fasern aus dem Gebäude heraus durch die Gebäudedurchführung zu dem Netzverteiler durchgeführt werden. Anschließend kann das Montagepersonal das Gebäude verlassen, und alle weiteren Arbeiten, insbesondere die Anbindung der aus dem Gebäude herausgeführten Fasern an das Glasfasernetz durch Herstellung von entsprechenden Verbindungsstellen im Netzverteiler, können ohne Betreten des Gebäudes durchgeführt werden. Zur Durchführung der an der Anschlussdose vormontierten Fasern ist es erfindungsgemäß vorgesehen, dass die vormontierten Fasern durch ein Leerrohr aus dem Gebäude heraus zum Netzverteiler geblasen werden.

Zum Test der Verbindungsqualität der optischen Fasern ist erfindungsgemäß ein weiterer Schritt b1) zwischen den Verfahrensschritten b) und c) vorgesehen, in dem ein Messgerät an den im Netzverteiler befindlichen Enden der Fasern angebracht wird. Durch entsprechende Messsignale kann die Messstrecke, die aus den durch das Schleifenelement miteinander verbundenen optischen Fasern gebildet wird, nacheinander in beiden Richtungen überprüft und das Messergebnis protokolliert werden.

Um für definierte Messbedingungen zu sorgen, ist es besonders vorteilhaft, wenn die Kontaktstellen zwischen Schleifenelement und Verbindungsanschlüssen werkseitig gereinigt und qualitätsgesichert sind.

Eine Ausführungsform der Erfindung ist in den Zeichnungen schematisiert dargestellt und wird nachfolgend beispielhaft erläutert.

Es zeigen:
- **Fig. 1**: ein Gebäude und einen Netzverteiler, die durch ein Leerrohr miteinander verbunden sind in schematisierter seitlicher Ansicht;
- **Fig. 2**: das Gebäude gemäß Fig. 1 nach Anbringung einer erfindungsgemäßen Anschlussdose im Gebäude;
- **Fig. 3**: die an der Anschlussdose im Gebäude gemäß Fig. 2 werkseitig vormontierten optischen Fasern nach dem Durchblasen durch das Leerrohr zur Durchführung zum Netzverteiler außerhalb des Gebäudes;
- **Fig. 4**: die Anbringung eines Messgeräts zum Test der in dem Netzverteiler gemäß Fig. 4 mündenden optischen Fasern;

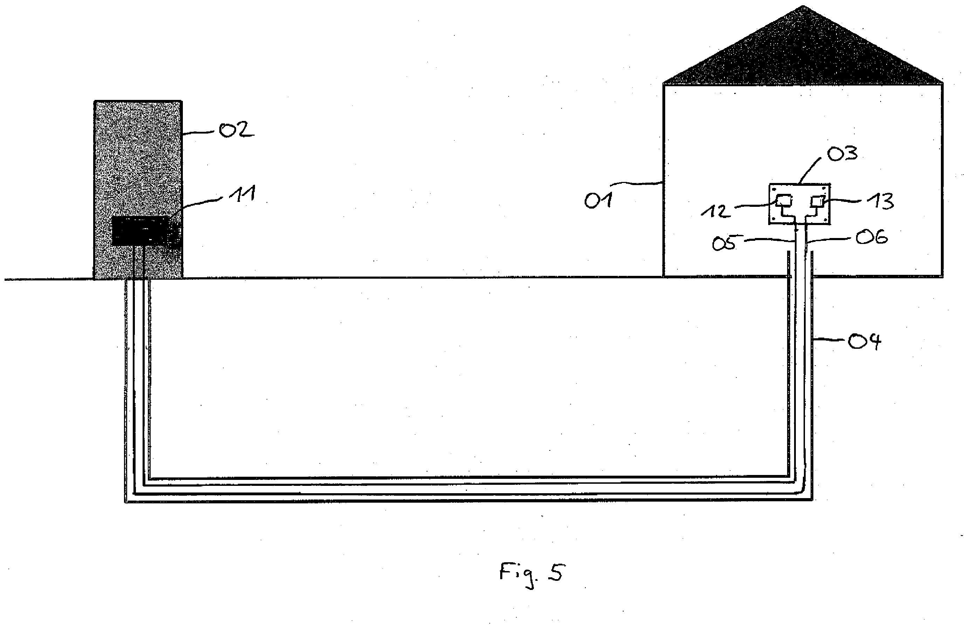

- **Fig. 5**: die Anschlussdose im Gebäude gemäß Fig. 2 nach Anschluss an ein glasfaserbasiertes Verteilernetz.

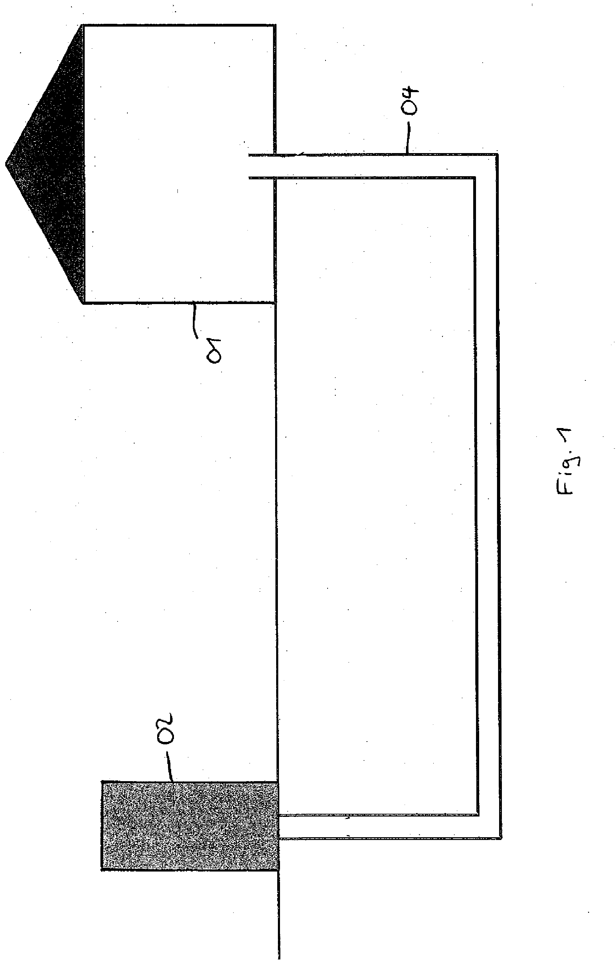

**Fig. 1** zeigt ein schematisiert dargestelltes Gebäude 01, das an ein glasfaserbasiertes Verteilnetz angeschlossen werden soll. Das glasfaserbasierte Verteilnetz mündet dabei in einen außerhalb des Gebäudes angebrachten Netzverteiler 02. Zur Herstellung eine FTTH-Anschlusses wird dabei zunächst eine Gebäudedurchführung mittels eines Leerrohrs 04 gebildet, so dass zwischen dem Netzverteiler 02 und dem Gebäude 01 eine Verbindung besteht, entlang der optische Fasern verlegt werden können.

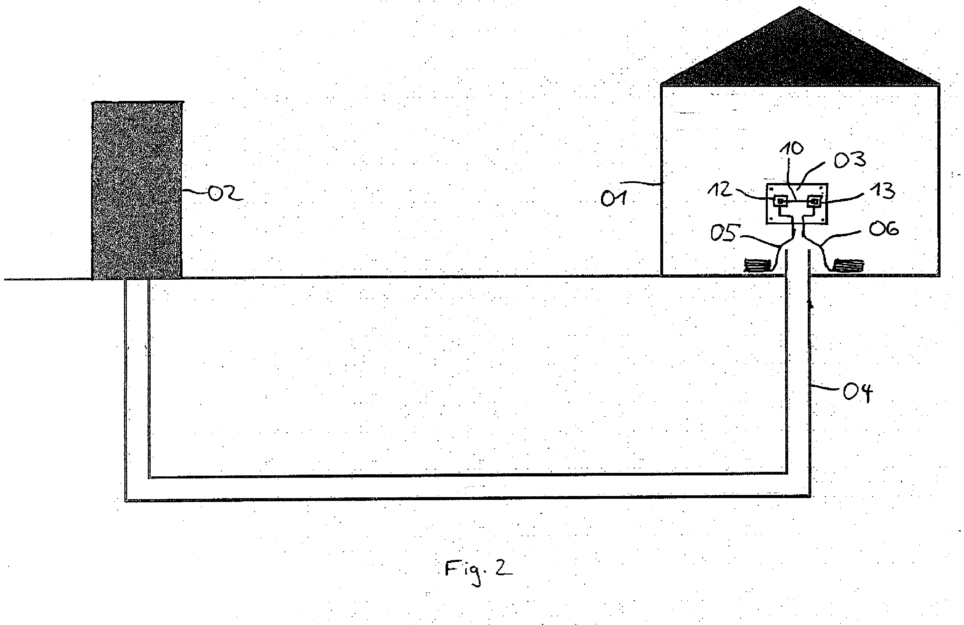

**Fig. 2** zeigt das Gebäude 01 nach Anbringung einer erfindungsgemäßen Anschlussdose 03 im Innenraum des Gebäudes 01. Die Anschlussdose 03 wird dabei an dem dafür vorgesehenen Anschlusspunkt im Gebäude 01 befestigt. Die Anschlussdose 03 umfasst im dargestellten Beispiel zwei Verbindungsanschlüsse 12 und 13. Bei diesen Verbindungsanschlüssen 12 und 13 kann es sich beispielsweise um geeignete Steckerdosen handeln, in denen optische Verbindungskabel eingesteckt werden können. Die für den optischen Anschluss der Anschlussdose 03 notwendigen Fasern 05 und 06 sind bereits werkseitig an der Anschlussdose 03 vormontiert. Insbesondere sind die optischen Fasern 05 und 06 werksseitig an den Verbindungsanschlüssen 12 und 13 angebracht, beispielsweise verspleißt. Insofern entfällt die Herstellung einer optischen Kontaktstelle zwischen den optischen Fasern 05 und 06 an den Verbindungsanschlüssen 12 und 13 auf der Baustelle. Nach der Fixierung der Anschlussdose 03 befinden sich die an der Anschlussdose 03 vormontierten optischen Fasern 05 und 06 zunächst innerhalb des Gebäudes 01.

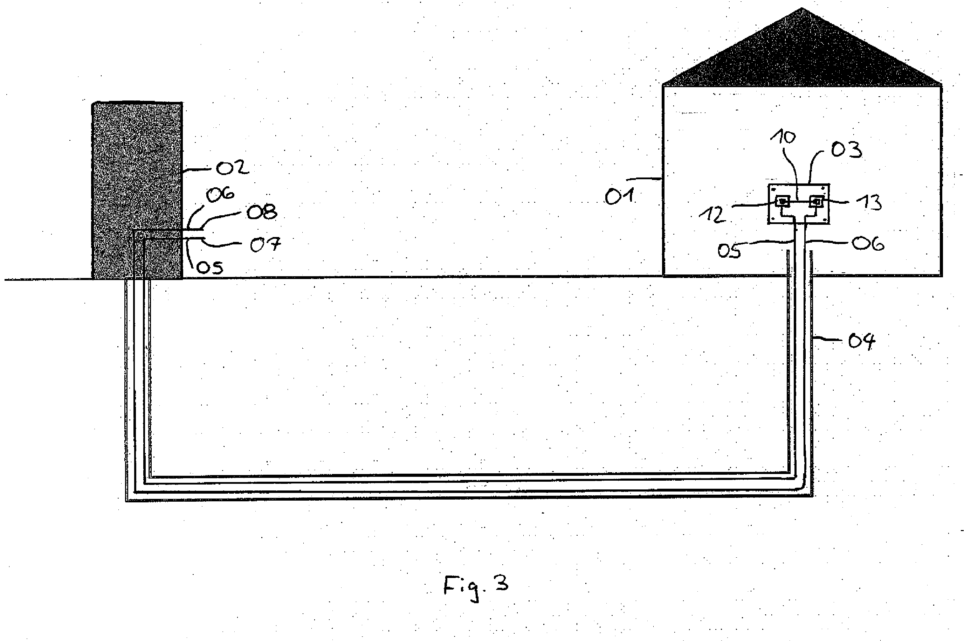

**Fig. 3** zeigt die Anschlussdose 03 mit den optischen Fasern 05 und 06, nachdem diese durch ein geeignetes Verfahren, beispielsweise durch Einblasen der Fasern 05 und 06, durch die Gebäudedurchführung entlang des Leerrohrs 04 zum Netzverteiler 02 durchgeführt wurden. Die Enden 07 und 08 der beiden optischen Fasern 05 und 06 münden außerhalb des Gebäudes 01 in den Netzverteiler 02. Sobald die an der Anschlussdose 03 vormontierten Fasern 05 und 06 durch das Leerrohr 04 durchgeblasen sind, kann das Montagepersonal das Gebäude 01 verlassen und alle weiteren Arbeiten zum Anschluss der Anschlussdose 03 an das glasfaserbasierte Verteilernetz 11 von außerhalb des Gebäudes durchführen.

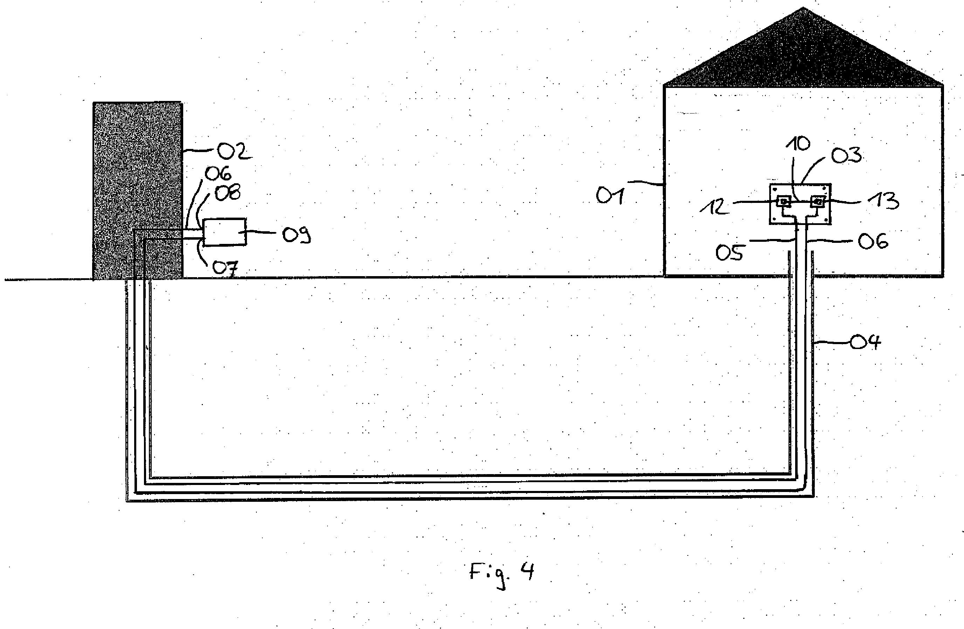

**Fig. 4** zeigt, wie die beiden Enden 07 und 08 der optischen Fasern 05 und 06 an ein Messgerät 09 angeschlossen sind. Um die Messung der optischen Übertragungsqualität in den Fasern 05 und 06 ohne weiteres Betreten des Gebäudes 01 durchführen zu können, sind die beiden Verbindungsanschlüsse 12 und 13 mit einem werkseitig vormontierten Schleifenelement 10 verbunden. Auf diese Weise bilden die beiden optischen Fasern 05 und 06 zusammen mit dem Schleifenelement 10 eine durchgängige optische Übertragungsstrecke, so dass durch entsprechend geeignete Messsignale ausgehend vom Messgerät 09 nacheinander die beiden optischen Fasern 05 und 06 durchgemessen werden können. Dabei werden die optischen Messsignale nacheinander zunächst am Ende 07 eingespeist und anschließend zusätzlich auch noch am Ende 08 eingespeist und am Ende 07 empfangen. Durch geeignete Messalgorithmen kann damit die optische Übertragungsqualität in den Fasern 05 und 06 überprüft werden.

Hat die Messung mit dem Messgerät 09 ergeben, dass die optische Übertragungsqualität in den Fasern 05 und 06 den vorgegebenen Toleranzen entspricht, so werden die Fasern 05 und 06 anschließend im Netzverteiler 02 an das lediglich schematisiert dargestellte glasfaserbasierte Verteilernetz 11 angeschlossen. Anschließend kann der Benutzer das Schleifenelement 10 an der Anschlussdose 03 entfernen und die Nutzung des glasfaserbasierten Verteilnetzes 11 durch Anstecken geeigneter Endgeräte an den Verbindungsanschlüssen 12 und 13 in Gebrauch nehmen.

Um ein vorzeitiges, unbefugtes Entfernen des Schleifenelements 10 vor Abschluss der Messungen mit dem Messgerät 09 jederzeit feststellen zu können, ist das vormontierte Schleifenelement 10 mit geeigneten Siegelelementen, beispielsweise geeigneten Aufklebern in den Verbindungsanschlüssen 12 und 13 gesichert. Wird also das Schleifenelement 10 vor Abschluss der Messungen mit dem Messgerät 09 unbefugt entfernt und anschließend wieder eingesteckt, so kann dies bei einer entsprechenden Inspektion durch Inaugenscheinnahme der gebrochenen Siegelelemente jederzeit festgestellt und dokumentiert werden.

## Patentansprüche

1. Anschlussdose (03) zum Anschluss an ein glasfaserbasiertes Verteilnetz (11) nach Anbringung der Anschlussdose (03) in einem Gebäude (01), mit zumindest einer optischen Faser (05, 06), mittels der optische Datensignale von außerhalb des Gebäudes (01) durch eine Gebäudedurchführung (04) in das Gebäude (01) übertragbar sind, wobei die Anschlussdose (03) zumindest einen Verbindungsanschluss (12, 13) zum Bereitstellen der optischen Datensignale an der Anschlussdose (03) umfasst, und wobei die in der Gebäudedurchführung (04) zu verlegende optische Faser (05, 06) am Verbindungsanschluss (12, 13) zur Übertragung der optischen Datensignale verbindbar ist, wobei die in der Gebäudedurchführung (04) zu verlegende optische Faser (05, 06) an der Anschlussdose (03) werksseitig vormontiert ist und in einer werksseitig vorkonfektionierten optischen Kontaktstelle mit dem Verbindungsanschluss (12, 13) verbunden ist
**dadurch gekennzeichnet,**
**dass** an der Anschlussdose (03) zumindest zwei Verbindungsanschlüsse (12, 13) vorgesehen sind, an denen jeweils eine optische Faser (05, 06) werksseitig vorkonfektioniert ist, und wobei an der Anschlussdose (03) zusätzlich zumindest ein optisches Schleifenelement (10) vorgesehen ist, durch das die Verbindungsanschlüsse (12, 13) paarweise zu Testzwecken miteinander verbindbar sind, und wobei an den Verbindungsstellen des in den Verbindungsanschlüssen (12, 13) vormontierten Schleifenelements (10) zumindest ein Siegelelement angeordnet ist, und wobei mittels des Siegelelements ein erstmaliges Lösen einer der Verbindungsstellen anzeigbar ist.

2. Anschlussdose nach Anspruch 1,
**dadurch gekennzeichnet,**
**dass** die in der Gebäudedurchführung (04) zu verlegenden optischen Fasern (05, 06), in der Art eines Kabels ausgebildet sind, das durch ein die Gebäudedurchführung bildendes Leerrohr (04) durchblasbar ist.

3. Anschlussdose nach einem der Ansprüche 1 oder 2, **dadurch gekennzeichnet, dass** das Schleifenelement (10) lösbar mit den Verbindungsanschlüssen (12, 13) verbunden ist, um eine Entfernung des Schleifenelements (10) nach Durchführung des Tests zu ermöglichen.

4. Verfahren zur Installation einer Anschlussdose (03) gemäß einem der Ansprüche 1-3 an einem glasfaserbasierten Verteilnetz (11), mit folgenden Verfahrensschritten:
a) Anordnung der Anschlussdose (03) im Gebäude (01);
b) Blasen der an der Anschlussdose (03) vormontierten Fasern (05, 06) durch ein Leerrohr (04) aus dem Gebäude (01) heraus durch die Gebäudedurchführung (04) zu einem Netzverteiler (02) außerhalb des Gebäudes (01);
bl) Anbringen eines Messgeräts (09) an den im Netzverteiler (02) mündenden Enden (07, 08) der Fasern (05, 06) und Messen der Qualität der optischen Datenübertragung durch die von den beiden Fasern (05, 06) und das Schleifenelement (10) gebildete Übertragungsstrecke mit dem Messgerät (09);
c) Anbindung der aus dem Gebäude (01) herausgeführten Fasern (05, 06) an ein glasfaserbasiertes Verteilnetz (11) durch Herstellung einer Verbindungsstelle im Netzverteiler (02).

5. Verfahren nach Anspruch 4, **dadurch gekennzeichnet,**
**dass** die mit dem Messgerät (09) durchgeführte Messung in einem Messprotokoll dokumentiert wird.

6. Verfahren nach Anspruch 4 oder 5, **dadurch gekennzeichnet,**
**dass** die Kontaktstellen zwischen Schleifenelement (10) und Verbindungsanschlüssen (12, 13) werksseitig gereinigt werden.

## Claims

1. A connection box (03) for being connected to a distribution network (11) based on glass fibre after the connection box (03) has been affixed in a building (01), the connection box (03) having at least one optical fibre (05, 06) by means of which optical data signals are transmitted from outside of the building (01) into the building (01) via a building duct (04), the connection box (03) comprising at least one connection port (12, 13) for providing the optical data signals at the connection box (03), and the optical fibre (05, 06) to be laid in the building duct (04) being connected at the connection port (12, 13) for transmitting the optical data signals, the optical fibre (05, 06) to be laid in the building duct (04) being pre-mounted at the connection box (03) by the manufacturer and being connected to the connection port (12, 13) in an optical contact point pre-fitted by the manufacturer,
**characterised in that**
at least two connection ports (12, 13) are provided at the connection box (03), an optical fibre (05, 06) being pre-mounted at each connection port (12, 13) by the manufacturer, at least one optical loop element (10) being additionally provided at the connection box (03), via which the connection ports (12, 13) are connected to one another in pairs for testing purposes, at least one seal element being disposed at the connection positions of the loop element (10) pre-mounted in the connection ports (12, 13), and an initial detachment of one of the connection positions being indicated by means of the seal element.

2. The connection box according to claim 1,
**characterised in that**
the optical fibres (05, 06) to be laid in the building duct (04) are realised in the form of a cable which is blown through a ductwork (04) forming the building duct.

3. The connection box according to claim 1 or 2,
**characterised in that**
the loop element (10) is detachably connected to the connection ports (12, 13) to enable removing the loop element (10) after having conducted the test.

4. A method for installing a connection box (03) according to any one of the claims 1 to 3 at a distribution network (11) based on glass fibre,
the method comprising the following steps:
a) disposing the connection box (03) in the building (01);
b) blowing the fibres (05, 06) pre-mounted at the connection box (03) through a ductwork (04) out of the building (01) via the building duct (04) to a network distributor (02) outside of the building (01);
b1) affixing a measuring device (09) to the ends (07, 08) of the fibres (05, 06) ending in the network distributor (02) and measuring the quality of the optical data transmission via the transmission path formed by the two fibres (05, 06) and the loop element (10) by means of the measuring device (09);
c) connecting the fibres (05, 06) guided out of the building (01) to a distributor network (11) based on glass fibre by producing a connection position in the network distributor (02).

5. The method according to claim 4,
**characterised in that**
the measurement conducted using the measuring device (09) is documented in a measurement report.

6. The method according to claim 4 or 5,
**characterised in that**
the contact points between the loop element (10) and the connection ports (12, 13) are cleaned by the manufacturer.

## Revendications

1. Boîte de jonction (03) pour la connexion à un réseau (11) de distribution à base de fibre de verre après que la boîte de jonction (03) ait été montée dans un bâtiment (01), la boîte de jonction (03) ayant au moins une fibre optique (05, 06) au moyen de laquelle des signaux optiques de données sont transmis de l'extérieur du bâtiment (01) à l'intérieur du bâtiment (01) à travers un conduit de bâtiment (04), la boîte de jonction (03) comprenant au moins un port de connexion (12, 13) pour fournir les signaux optiques de données à la boîte de jonction (03), et la fibre optique (05, 06) à être posée dans le conduit de bâtiment (04) étant connectée au port de connexion (12, 13) pour transmettre les signaux optiques de données, la fibre optique (05, 06) à être posée dans le conduit de bâtiment (04) étant pré-montée à la boîte de jonction (03) par le fabricant et étant connectée au port de connexion (12, 13) dans un point de contact optique pré-confectionné par le fabricant,
**caractérisée en ce**
**qu'**au moins deux ports de connexion (12, 13) sont prévus à la boîte de jonction (03), une fibre optique (05, 06) étant pré-montée à chaque port de connexion (12, 13) par le fabricant, au moins un élément de rebouclage (10) optique étant prévu en outre à la boîte de jonction (03), au moyen duquel les ports de connexion (12, 13) sont connectés l'un à l'autre par paire pour des tests, au moins un élément de sceau étant disposé aux positions de connexion de l'élément de rebouclage (10) pré-monté dans les ports de connexion (12, 13), et un premier détachement de l'une des positions de connexion étant indiqué au moyen de l'élément de sceau.

2. Boîte de jonction selon la revendication 1,
**caractérisée en ce que**
les fibres optiques à être posées dans le conduit de bâtiment (04) sont réalisées en forme d'un câble qui est soufflé à travers un tube vide (04) formant le conduit de bâtiment.

3. Boîte de jonction selon la revendication 1 ou 2,
**caractérisée en ce que**
l'élément de rebouclage (10) est connecté de manière détachable aux ports de connexion (12, 13) pour permettre d'enlever l'élément de rebouclage (10) après que le test ait été effectué.

4. Procédé pour l'installation d'une boîte de jonction (03) selon l'une quelconque des revendications 1 à 3 à un réseau (11) de distribution à base de fibre de verre,
le procédé comprenant les étapes suivantes :
a) disposer la boîte de jonction (03) dans le bâtiment (01);
b) souffler les fibres (05, 06) pré-montées à la boîte de jonction (03) à travers un tube vide (04) vers l'extérieur du bâtiment (01) à travers le conduit de bâtiment (04) jusqu'à un distributeur de réseau (02) à l'extérieur du bâtiment (01);
b1) attacher un dispositif de mesure (09) aux extrémités (07, 08) des fibres (05, 06) se terminant dans le distributeur de réseau (02) et mesurer la qualité de la transmission des données optiques au moyen du dispositif de mesure (09) par le trajet de transmission formé par les deux fibres (05, 06) et l'élément de rebouclage (10);
c) connecter les fibres (05, 06) guidées vers l'extérieur du bâtiment (01) à un réseau (11) de distribution à base de fibre de verre en produisant une position de connexion dans le distributeur de réseau (02).

5. Procédé selon la revendication 4,
**caractérisé en ce que**
la mesure effectuée en utilisant le dispositif de mesure (09) est documentée dans un protocole de mesure.

6. Procédé selon la revendication 4 ou 5,
**caractérisé en ce que**
les points de contact entre l'élément de rebouclage (10) et les ports de connexion (12, 13) sont nettoyés par le fabricant.
